(19) Europäisches Patentamt
European Patent Office
Office européen des brevets

(11) **EP 2 150 064 A2**

(12) # EUROPEAN PATENT APPLICATION

(43) Date of publication:
**03.02.2010 Bulletin 2010/05**

(51) Int Cl.:
**H04N 11/18** (2006.01)

(21) Application number: **09008565.5**

(22) Date of filing: **30.06.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(30) Priority: **29.07.2008 JP 2008194711**

(71) Applicant: **NEC Electronics Corporation Kawasaki, Kanagawa 211-8668 (JP)**

(72) Inventor: **Yamashita, Kenji Kawasaki Kanagawa 211-8668 (JP)**

(74) Representative: **Glawe, Delfs, Moll Patent- und Rechtsanwälte Postfach 26 01 62 80058 München (DE)**

(54) **Video signal processing apparatus and method**

(57)     A video signal processing apparatus generates first to third correlation values based on five sequential video line signals C(n-2) to C(n+2) that include two kinds of color-difference signals transmitted line sequentially. The first correlation value indicates degree of similarity between C(n+1) and C(n-1), the second correlation value indicates degree of similarity between C(n+2) and C(n), and the third correlation value indicates degree of similarity between C(n) and C(n-2). When the degree of similarity between C(n+1) and C(n-1) is evaluated to be smaller than a predetermined level based on the first correlation value, the apparatus determines a mixing ratio of C(n+1) and C(n-1) according to relative magnitude of the third correlation value with respect to the second correlation value. The apparatus outputs a mixed signal obtained by mixing the signals C(n+1) and C(n-1) according to the mixing ratio and the video signal C(n) as two simultaneous color-difference signals.

Fig. 1

EP 2 150 064 A2

**Description**

BACKGROUND OF THE INVENTION

1. Field of the Invention

The present invention relates to a video signal processing apparatus which generates two simultaneous color difference signals from video signals such as SECAM.

2. Description of Related Art

In SECAM, which is one of television systems, two color-difference signals Cr and Cb are alternately transmitted in line sequential. To be more specific, SECAM uses two color subcarriers having different frequencies from each other. The two color subcarriers are frequency-modulated according to either of the color-difference signals Cr or Cb. The two modulated signals obtained by frequency modulating the two color subcarriers by the color difference signals Cr or Cb are respectively referred to as carrier chrominance signals DR and DB. In SECAM, the carrier chrominance signals DR and DB are transmitted alternately line by line. As SECAM is a composite system, the carrier chrominance signals DR and DB are multiplexed with a luminance signal Y and transmitted as a composite video signal.

In order to generate a playback image from the SECAM composite video signal (hereinafter referred to as a SECAM signal) to generate, the two simultaneous color-difference signals Cr and Cb must be generated. The two simultaneous color-difference signals are obtained by receiving the color difference signals which are alternately transmitted line sequentially and generating either of a missing color-difference signal for each line. This process is disclosed in Japanese Unexamined Patent Application Publications No. 01-236885, 2006-108779, and 06-54338, for example. One of the most primitive simultaneous methods interpolates a missing color-difference signal of a target line with a color-difference signal of one previous line. Another primitive simultaneous method interpolates a missing color-difference signal of a target line with an average value of color-difference signals of two vertically adjacent lines.

In the above primitive simultaneous methods, vertical resolution of the color-difference signals deteriorates. There is a known improved simultaneous method, in which a mixing ratio of color-difference signals of vertically adjacent lines is determined according to the magnitude of a correlation in the vertical direction of the color-difference signals, and the missing color-difference signal in the target line is interpolated by the color difference signal mixed at the corresponding mixing ratio. Japanese Unexamined Patent Application Publication No.01-236885 (JP01-236885A) discloses the abovementioned improved interpolation method.

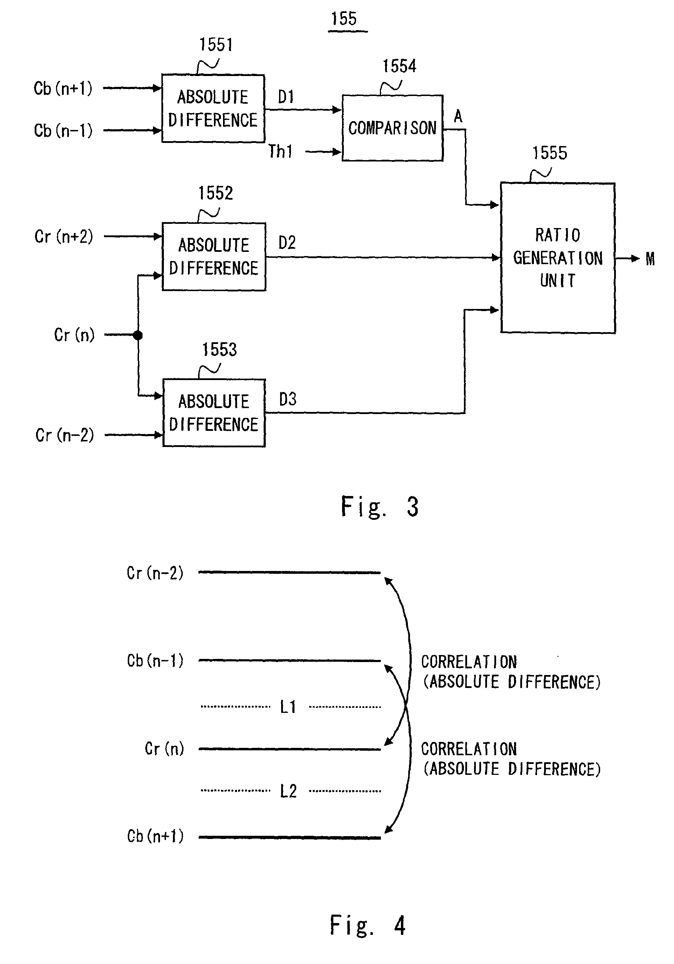

JP01-236885A discloses a video signal processing apparatus for carrying out a simultaneous process of two color-difference signals transmitted line sequentially. The operation of the apparatus disclosed in JP01-236885A is explained hereinafter with reference to Fig. 4. Fig. 4 shows color-difference signals to be transmitted line sequentially. Hereinafter, a target line to carry out a simultaneous process is referred to as the nth line. In the example of Fig. 4, color-difference signal Cr(n) is transmitted on the nth line. Thus an interpolation color-difference signal generated in the simultaneous process is Cb(n).

The apparatus disclosed in JP01-236885A generates the missing color-difference signal Cb(n) of the target nth line by mixing vertically adjacent color-difference signals Cb(n+1) and Cb(n-1). At this time, the apparatus disclosed in JP01-236885A changes the mixing ratio of Cb(n+1) and Cb(n--1) according to the magnitude of a correlation between the lines of the color-difference signals.

Further, the apparatus disclosed in JP01-236885A uses both of the correlation between Cb(n+1) and Cb(n-1) and the correlation between Cr(n) and Cr(n-2) in order to determine a change in color tone in either between the (n-1) th line and the nth line (L1 in Fig. 4) or between the nth line and the (n+1)th line (L2 in Fig. 4). More specifically, if the correlation between Cb(n+1) and Cb(n-1) is small and the correlation between Cr(n) and Cr(n-2) is also small, the mixing ratio of Cb(n-1) is made relatively small and the mixing ratio of Cb(n+1) is made relatively large. This is because that in this case, a large color tone change is assumed to exist between the (n-1)th, line and the nth line (L1 in Fig. 4). On the other hand, if the correlation between Cb(n+1) and Cb(n-1) is small and the correlation between Cr(n) and Cr(n-2) is large, the mixing ratio of Cb(n-1) is made relatively large and the mixing ratio of Cb(n+1) is made relatively small.

SUMMARY

As described above, JP01-236885A discloses to use both the correlation between Cb(n+1) and Cb(n-1), and the correlation between Cr(n) and Cr(n-2) in order to determine the mixing ratio of the color-difference signals Cb(n+1) and Cb(n-1). However, JP01-236885A does not disclose how to specifically determine the mixing ratio.

Moreover, JP01-236885A uses the correlation between Cr(n) and Cr(n-2) in order to determine the mixing ratio of the color-difference signals Cb(n+1) and Cb(n-1). However, even if the correlation between Cr(n-2) and Cr(n) is determined to be large using a certain criterion, the correlation between Cr(n)and Cr(n+2) may actually be larger. Thus the present inventor has found a problem that only the disclosure of JP01-236885A cannot appropriately provide the criterion to determine the magnitude of the correlation between Cr(n-2) and Cr(n), and it is difficult to appropriately adjust the mixing ratio of Cb(n+1) and Cb(n-1).

In order to solve the abovementioned problem, a video signal processing apparatus according to a first exemplary aspect of the present invention includes a correlation value generation unit, a mixing ratio generation unit, a signal mixing unit, and an output unit. The correlation value generation unit generates a first, a second and a third correlation values based on five sequential video line signals C(n-2) to C(n+2) that include two kinds of color-difference signals transmitted line sequentially. The first correlation value indicates a degree of similarity between C(n+1) and C(n-1). The second correlation value indicates a degree of similarity between C(n+2) and C(n). The third correlation value indicates a degree of similarity between C(n) and C(n-2). The mixing ratio generation unit generates a mixing ratio of C(n+1) and C(n-1) according to a relative magnitude of the third correlation value with respect to the second correlation value when the degree of similarity between C(n+1) and C(n-1) is evaluated to be smaller than a predetermined level based on the first correlation value. The signal mixing unit mixes C(n+1) and C(n-1) according to the mixing ratio. Lastly, the output unit outputs a signal mixed by the signal mixing unit and the video line signal C(n) as two simultaneous color-difference signals.

The video signal processing apparatus according to the first exemplary aspect of the invention generates the mixing ratios of the signals C(n+1) and C(n-1) according to the relative magnitude of the third correlation value (indicating the degree of similarity between C(n) and C(n-2)) with respect to the second correlation value (indicating the degree of similarity between C(n+2) and C(n)). Thus, if the correlation between the signals C(n+1) and C(n-1) is small, the mixing ratio of C(n+1) and C(n-1) can be adjusted appropriately.

Accordingly, when carrying out a simultaneous process and demodulating color-difference signals transmitted line sequentially, the first exemplary aspect of the invention enables to appropriately adjust the mixing ratio to generate a missing color-difference signal by mixing the color-difference signals of adjacent lines, thereby suppressing from deteriorating the vertical resolution of the color-difference signals.

BRIEF DESCRIPTION OF THE DRAWINGS

The above and other exemplary aspects, advantages and features will be more apparent from the following description of certain exemplary embodiments taken in conjunction with the accompanying drawings, in which:

Fig. 1 is a block diagram showing the configuration of a video signal processing apparatus according to a first exemplary embodiment of the present invention;
Fig. 2 is a block diagram showing a configuration example of a simultaneous conversion unit included in the video signal processing apparatus shown in Fig. 1;
Fig. 3 is a block diagram showing a configuration example of a mixing ratio determination unit included in the simultaneous conversion unit shown in Fig. 2;
Fig. 4 explains a synchronization process carried out by a video signal processing apparatus of a related art using color-difference signals of 4 lines;
Fig. 5 is a block diagram showing a reference embodiment of a simultaneous conversion unit;
Fig. 6 is a block diagram showing a reference embodiment of a mixing ratio determination unit; and
Fig. 7 is a block diagram showing other reference embodiment of a mixing ratio determination unit.

DETAILED DESCRIPTION OF THE EXEMPLARY EMBODIMENTS

The specific exemplary embodiments to which the present invention is applied will be described in detail with reference to the accompanying drawings. The same components throughout the drawings are denoted by the same reference numerals, and the overlapping description will be omitted as appropriate for the sake of clarity.

[First exemplary embodiment]

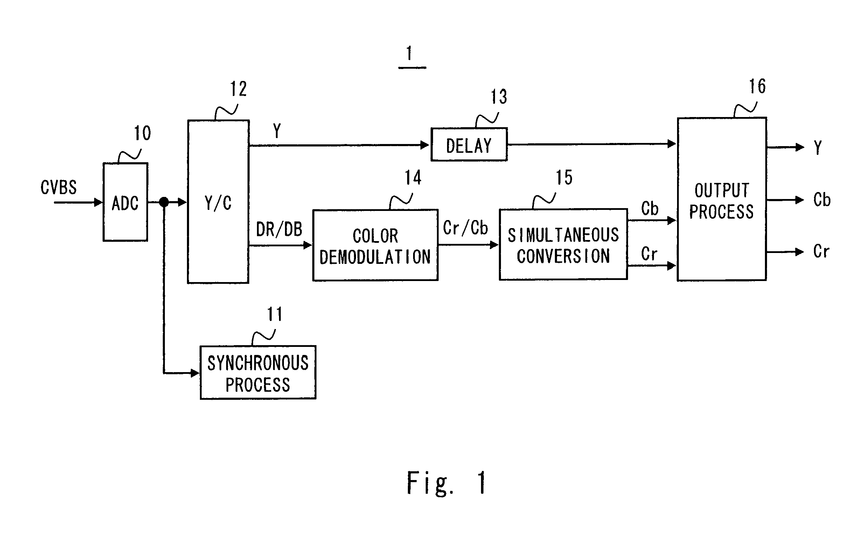

A video signal processing apparatus 1 according to this embodiment receives a composite video signal (CVBS) of SECAM. The apparatus 1 separates a luminance signal Y and two kinds of color-difference signals Cr and Cb from the composite video signal, and outputs these signals. Fig. 1 is a block diagram showing the configuration of the video signal processing apparatus 1. Each component shown in Fig. 1 is explained hereinafter.

An A/D converter 10 executes sampling of an analog composite video signal CVBS by a predetermined system clock. A synchronous processing unit 11 inputs data sampled by the A/D converter 10 and detects a vertical synchronization signal Vsync and a horizontal synchronization signal Hsync.

A Y/C separation unit 12 separates a luminance signal Y from carrier chrominance signals DR and DB. The separated luminance signal Y is delayed by a predetermined period by a delay circuit 13 and then supplied to an output processing unit 16. On the other hand, the carrier chrominance signals DR and DB are supplied to a color demodulation unit 14.

The color demodulation unit 14 demodulates the color-difference signals Cr and Cb from the carrier chrominance signals DR and DB. However, in SECAM, the color-difference signals Cr and Cb are transmitted alternately line by line in line sequential fashion. Therefore, signals output from the color demodulation unit 14 include Cr and Cb alternately line by line. The color-difference signals before the simultaneous process are hereinafter referred to as "line sequential chrominance signals".

A simultaneous conversion unit 15 generates a missing color-difference signal in each line using color-difference signals of adjacent lines and outputs two simultaneous color-difference signals for each line. The configuration of the simultaneous conversion unit 15 and details of signal processes are described later in detail.

The output processing unit 16 receives the luminance signal Y and the color-difference signals Cr and Cb. Then the output processing unit 16 performs various image processing such as visual interpolation process and sampling rate conversion.

The configuration of the simultaneous conversion unit 15 and the details of signal processes are described hereinafter. The simultaneous conversion unit 15 delays the linear sequential color-difference signal input from the color demodulation unit 14 by four horizontal periods in order to carry out a simultaneous process using line sequential color-differential signals of five adjacent lines in total.

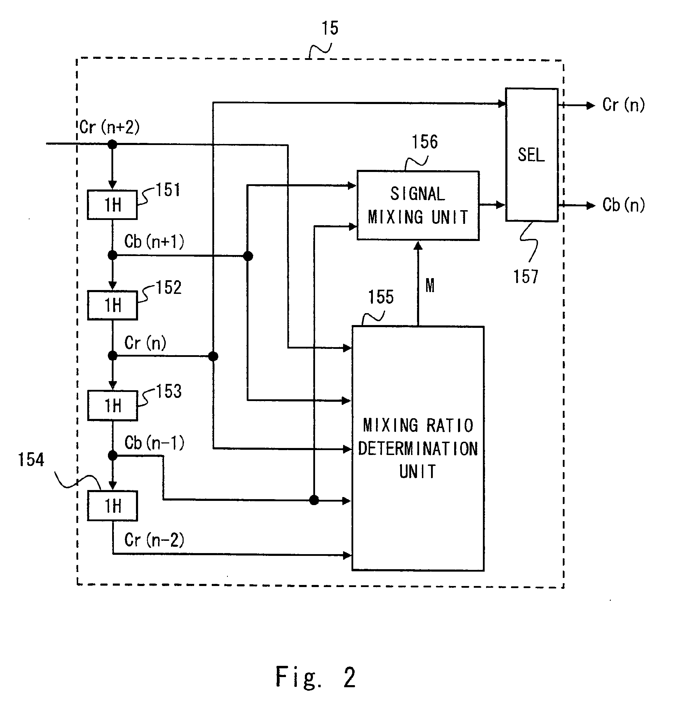

Fig. 2 is a block diagram showing a configuration example of the simultaneous conversion unit 15. In Fig. 2, each of delay circuits 151 to 154 delays an input signal by one horizontal period. For convenience of explanation, a line sequential color-difference signal input to the unit 15 of Fig. 2 is referred to as a color difference signal Cr(n+2) in the (n+2)th line. Accordingly, outputs from the delay circuits 151 to 154 are respectively denoted Cb(n+1), Cr(n), Cb(n-1), and Cr(n-2).

A mixing ratio determination unit 155 receives the color-difference signals of five lines and generates a parameter M. The parameter M specifies the mixing ratio of the color-difference signals Cb(n+1) and Cb(n-1) in a signal compose unit 156 described later.

The signal mixing unit 156 mixes the signals Cb(n+1) and Cb(n-1) according to the parameter M provided by the mixing ratio determination unit 155. A color-difference signal generated by the mixture is supplied to a selection unit 157 as an interpolation signal of the missing color-difference signal Cb(n) in the nth line. For example, if the parameter M can be a value in a range 0 to 1, indicating the mixing ratio of the color-difference signal Cb(n-1) in the (n-1)th line, the signal mixing unit 156 may generate the color-difference signal Cb(n) by the calculation indicated in the formula (1).

$$(1-M) \times Cb(n+1) + M \times Cb(n-1) \qquad (1)$$

The selection unit 157 operates in response to a timing signal output from the synchronization processing unit 11 according to the horizontal synchronization signal Hsync. The selection unit 157 supplies the line sequential color-difference signal Cr(n) in the nth line, which is supplied from the color demodulation unit 14, and the color-difference signal Cb(n), which is generated by the interpolation, to the output processing unit 16.

Next, a specific configuration example of the mixing ratio determination unit 155 and a specific example of the parameter M are described with reference to Fig. 3. Fig. 3 is a block diagram showing a configuration example of the mixing ratio determination unit 155.

In Fig. 3, an absolute difference generation unit 1551 generates an absolute difference D1 between the color-difference signals Cb(n+1) and Cb(n-1). Similarly, an absolute difference generation unit 1552 generates an absolute difference D2 between the color-difference signals Cr(n+2) and Cr(n). Further, an absolute difference generation unit 1553 generates an absolute difference D3 between the color-difference signals Cr(n) and Cr(n-2). The absolute differences D1 to D3 are expressed by the following formulas (2) to (4).

$$D1 = |Cb(n+1) - Cb(n-1)| \qquad (2)$$

$$D2 = |Cr(n+2) - Cr(n)| \qquad (3)$$

$$D3 = |Cr(n) - Cr(n-2)| \qquad (4)$$

The absolute differences D1 to D3 are one of correlation parameters indicating degree of similarity between two color-difference signals. For example, the larger the absolute difference D1, the smaller the degree of similarity between the color difference signals Cb(n+1) and Cb(n-1), meaning that the correlation between Cb(n+1) and Cb(n-1) is smaller.

A comparison unit 1554 determines whether the degree of similarity (correlation) between the color-difference signals Cb(n+2) and Cb(n-1) is larger than a predetermined reference value. More specifically, as shown in Fig. 3, the comparison unit 1554 compares the absolute difference D1 with a predetermined threshold Th1 and outputs a comparison result A. For example, if the absolute difference D1 is larger than the threshold Th1, the unit 1554 sets the value of A to"1". If the difference absolute value D1 is less than or equal to the threshold Th1, the unit 1554 sets the value of A to "0".

A ratio generation unit 1555 calculates the parameter M according to the absolute difference D2 and D3, and the comparison result A. An example of a calculation procedure of the parameter M is described hereinafter. The ratio generation unit 1555 refers to the comparison result A and if the degree of similarity (correlation) between the color-difference signals Cb(n+1) and Cb(n-1) is larger than the predetermined reference value, the ratio generation unit 1555 sets the value of the parameter M to 1/2. To be more specific, if the comparison result A equals to "0", the ratio generation unit 1555 sets the value of the parameter M to 1/2. As it is obvious from the abovementioned formula (1), when M=1/2, the interpolation signal Cb(n) is an average value of the color-difference signal Cb(n+1) and Cb(n-1).

On the other hand, if the degree of similarity (correlation) between the color-difference signals Cb(n+1) and Cb(n-1) is smaller than the predetermined reference value, the ratio generation unit 1555 calculates D2/(D2+D3) as the parameter M. That is, the ratio generation unit 1555 calculates the parameter M by the following formula (5).

$$M = \begin{cases} 1/2 & , A = 0 \\ D2/(D2+D3) & , A = 1 \end{cases} \qquad (5)$$

In other words, the ratio generation unit 1555 determines the parameter M, which specifies the mixing ratio, according to a relative magnitude of the similarity (correlation) between Cr(n) and Cr(n-2) with respect to the similarity (correlation) between Cr(n+2) and Cr(n). For example, if Cr(n) is evaluated to be more similar to Cr(n-2) than Cr(n+2), the ratio generation unit 1555 generates the parameter M so that the mixing ratio of Cb(n-1) is larger than that of Cb (n+1). Conversely, if Cr(n) is evaluated to be more similar to Cr(n+2) than Cr(n-2), the ratio generation unit 1555 generates the parameter M so that the mixing ratio of Cb(n+1) is larger than that of Cb(n-1).

As described above, in this embodiment, if the degree of similarity between Cb(n+1) and Cb(n-1) is evaluated to be smaller than the predetermined level, the mixing ratio of Cb(n+1) and Cb(n-1) is determined according to the relative magnitude of the similarity between Cr(n) and Cr(n-2) with respect to the similarity between Cr(n+2) and Cr(n). Thus, a color tone change in vertical adjacent lines to the nth line is evaluated to generate the color-difference signal Cb(n) for interpolation.

It is noted that the above explanation assumes that the video signal processing apparatus 1 is a digital circuit. However at least a part of the apparatus 1 may be configured as an analog circuit.

While the invention has been described in terms of several exemplary embodiments, those skilled in the art will recognize that the invention can be practiced with various modifications within the spirit and scope of the appended claims and the invention is not limited to the examples described above.

Further, the scope of the claims is not limited by the exemplary embodiments described above.

Furthermore, it is noted that, Applicant's intent is to encompass equivalents of all claim elements, even if amended later during prosecution.

(Reference embodiment 1)

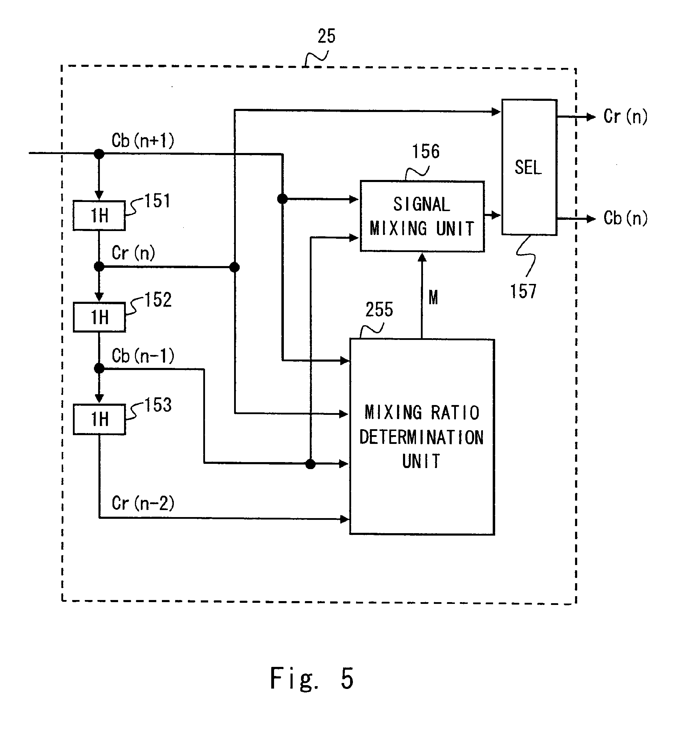

A modification of the simultaneous conversion unit 15 devised by the present inventor is described hereinafter. A simultaneous conversion unit 25 shown in Fig. 5 performs a simultaneous process of linear sequential color-difference signals. The simultaneous conversion unit 15 in the video signal processing apparatus 1 of Fig. 1 can be replaced with the simultaneous conversion unit 25. The unit 25 delays a line sequential color-difference signal input from the color demodulation unit 14 by three horizontal periods in order to carry out a simultaneous process using line sequential color-differential signals of four lines in total. It is noted that in Fig. 5, the delay units 151 to 153, the signal mixing unit 156, and the selection unit 157 are the same as the units denoted by identical reference numerals included in the simultaneous conversion unit 15 shown in Fig. 2.

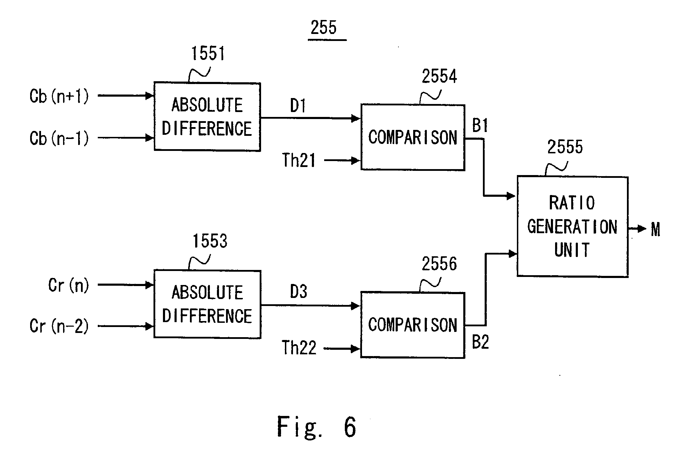

A mixing ratio determination unit 255 inputs the color-difference signals of four lines and generates a parameter M. The parameter M specifies the mixing ratio of the color-difference signals Cb(n+1) and Cb(n-1). A specific configuration example of the mixing ratio determination unit 255 and a specific example of the parameter M are described with reference to Fig. 6. Fig. 6 is a block diagram showing a configuration example of the mixing ratio determination unit 255.

In Fig. 6, the absolute difference generation units 1551 and 1553 are the same as the units indicated by the same reference numerals in Fig. 3. That is, the absolute difference generation unit 1551 generates the absolute difference D1 of the color-difference signals Cb(n+1) and Cb(n-1). Further, the absolute difference generation unit 1553 generates the absolute difference D3 of the color-difference signals Cr(n) and Cr(n-2).

A comparison unit 2554 determines whether the degree of similarity (correlation) between the color-difference signals Cb(n+1) and Cb(n-1) is larger than the predetermined reference level. More specifically, as shown in Fig. 6, the comparison unit 2554 compares the absolute difference D1 with a predetermined threshold Th21 and outputs a comparison result B1. For example, if the absolute difference D1 is larger than the threshold Th21, the unit 2554 sets the value of B1 to "1". If the difference absolute value D1 is less than or equal to the threshold Th21, the unit 2554 sets the value of B1 to "0".

Similarly, a comparison unit 2556 determines whether the degree of similarity (correlation) between the color-difference signals Cr(n) and Cr(n-2) is larger than the predetermined reference level. More specifically, as shown in Fig. 6, the comparison unit 2556 compares the absolute difference D3 with a predetermined threshold Th22 and outputs a comparison result B2. For example, if the absolute difference D3 is larger than the threshold Th22, the unit 2556 sets the value of B2 to "1". If the difference absolute value D1 is less than or equal to the threshold Th22, the unit 2556 sets the value of B2 to "0".

A ratio generation unit 2555 inputs the comparison results B1 and B2, and calculates the parameter M according to those values. An example of a calculation procedure of the parameter M is described hereinafter. The ratio generation unit 2555 refers to the comparison result B1 and if the degree of similarity (correlation) between the color-difference signals Cb(n+1) and Cb(n-1) is larger than the predetermined reference value, the ratio generation unit 2555 sets the value of the parameter M to 1/2. Specifically, when the comparison result B1 equals to "0", the ratio generation unit 2555 sets the value of the parameter M to 1/2. As described above, when M=1/2, the interpolation signal Cb(n) becomes an average value of the color-difference signals Cb(n+1) and Cb(n-1). The contents of this process by the ratio generation unit 2555 is same as the ratio generation unit 1555.

On the other hand, if the degree of similarity (correlation) between the color-difference signals Cb(n+1) and Cb(n-1) is smaller than the predetermined reference value, the ratio generation unit 2555 refers to the comparison result B2 to determine the parameter M. Specifically, the ratio generation unit 2555 may calculate the parameter M by the following formula (6).

$$M = \begin{cases} 1/2 & , B1 = 0 \\ 1 & , B1 = 1 \ and \ B2 = 0 \\ 0 & , B1 = 1 \ and \ B2 = 1 \end{cases} \quad (6)$$

According to the above formula (6), when Cr(n) and Cr(n-2) are determined to be similar, the ratio generation unit 2555 generates the parameter M so that the mixing ratio of Cb(n-1) becomes 1 and the mixing ratio of Cb(n+1) becomes 0. Conversely, when Cr(n) and Cr(n-2) are determined to be dissimilar, the ratio generation unit 2555 generates the parameter M so that the mixing ratio of Cb(n-1) becomes 0 and the mixing ratio of Cb(n+1) becomes 1.

(Reference embodiment 2)

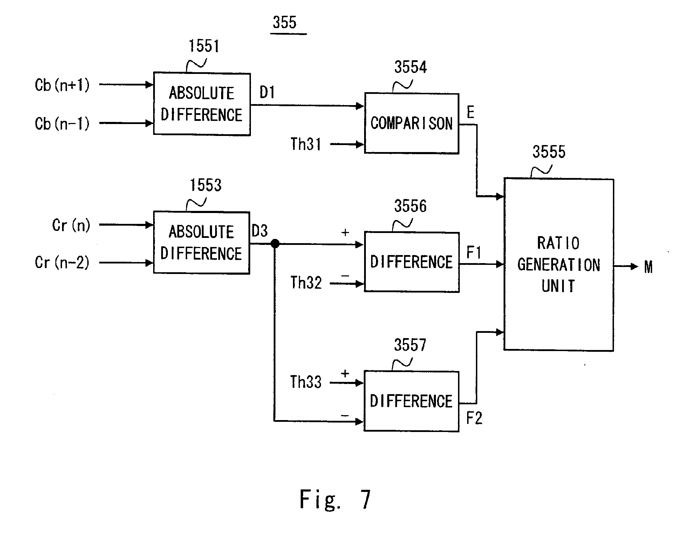

The mixing ratio determination unit 255 in the simultaneous conversion unit 25 shown in Fig. 5 can be replaced with a mixing ratio determination unit 355 shown in Fig. 7. In Fig. 7, the absolute difference generation units 1551 and 1553 are the same as the units indicated by the same reference numerals in Fig. 3.

The comparison unit 3554 determines whether the degree of similarity (correlation) between the color-difference signals Cr(n+1) and Cr(n-1) is larger than the predetermined reference level. More specifically, as shown in Fig. 7, the comparison unit 3554 compares the absolute difference D1 with a predetermined threshold Th31 and outputs a comparison result E. For example, if the absolute difference D1 is larger than the threshold Th31, the unit 3554 sets the value of E to "1". If the difference absolute value D1 is less than or equal to the threshold Th31, the unit 3554 sets the value of E to "0".

A difference generation unit 3556 calculates a difference between the absolute difference D3 and a predetermined threshold Th32 (D3-Th32), and supplies a calculation result F1 to a ratio generation unit 3555. The threshold Th32 here shall be a positive value.

A difference generation unit 3557 calculates a difference between the absolute difference D3 and the predetermined threshold Th33 (Th33-D3) and supplies a calculation result F2 to the ratio generation unit 3555. The threshold Th33 here shall be a positive value and larger than Th32.

The ratio generation unit 3555 in Fig. 7 calculates the parameter M according to the comparison result E, and the calculation results F1 and F2. An example of a calculation procedure of the parameter M is described hereinafter. The ratio generation unit 3555 refers to the comparison result E and if the degree of similarity (correlation) between the color-difference signals Cb(n+1) and Cb(n-1) is larger than the predetermined reference value, the ratio generation unit 3555 sets the value of the parameter M to 1/2. Specifically, when the comparison result E equals to "0", the ratio generation unit 3555 sets the value of the parameter M to 1/2. As described above, when M=1/2, the interpolation signal Cb(n) becomes an average value of the color-difference signals Cb(n+1) and Cb(n-1). The contents of this process by the ratio generation unit 3555 is same as the ratio generation unit 1555.

On the other hand, if the degree of similarity (correlation) between the color-difference signals Cb(n+1) and Cb(n-1) is smaller than the predetermined reference value, the ratio generation unit 3555 refers to the comparison results F1 and F2 to determine the parameter M. Specifically, the ratio generation unit 3555 may calculate the parameter M the following formula (7).

$$M = \begin{cases} 1/2 & , E = 0 \\ 1 & , E = 1 \ and \ F1 \le 0 \\ 0 & , E = 1 \ and \ F2 \le 0 \\ F2/(F1+F2) & , E = 1, F1 > 0 \ and \ F2 > 0 \end{cases} \quad (7)$$

According to the above formula (7), when Cr(n) and Cr(n-2) are evaluated to be similar, the ratio generation unit 3555 generates the parameter M so that the mixing ratio of Cb(n-1) becomes 1 and the mixing ratio of Cb(n+1) becomes 0. Conversely, if Cr(n) and Cr(n-2) are determined to be dissimilar, the ratio generation unit 3555 generates the parameter M so that the mixing ratio of Cb(n-1) becomes 0 and the mixing ratio of Cb(n+1) becomes 1.

Further, according to the above formula (7), if the degree of similarity of Cr(n) and Cr(n-2) is determined to be middle level, the ratio generation unit 3555 generates the parameter M so that Cb(n+1) and Cb(n-1) are mixed together.

**Claims**

1. A video signal processing apparatus comprising:

a correlation value generation unit configured to generate a first, a second and a third correlation values based on five sequential video line signals C(n-2) to C(n+2) that include two kinds of color-difference signals transmitted line sequentially, the first correlation value indicating a degree of similarity between the signals C(n+1) and C(n-1), the second correlation value indicating a degree of similarity between the signals C(n+2) and C(n), and the third correlation value indicating a degree of similarity between the signals C(n) and C(n-2),
a mixing ratio generation unit that generates a mixing ratio of the signals C(n+1) and C(n-1) according to a relative magnitude of the third correlation value with respect to the second correlation value when the degree of similarity between the signals C(n+1) and C(n-1) is evaluated to be smaller than a predetermined level based on the first correlation value;
a signal mixing unit that mixes the signals C(n+1) and C(n-1) according to the mixing ratio; and
an output unit that outputs a signal mixed by the signal mixing unit and the signal C(n) as two simultaneous color-difference signals.

**2.** The video signal processing apparatus according to claim 1, wherein when the degree of similarity between the signals C(n+1) and C(n-1) is evaluated to be larger than the predetermined level, the mixing ratio generation unit generates the mixing ratio to be a predetermined value regardless of the second and the third correlation values.

**3.** The video signal processing apparatus according to claim 1, wherein
the second correlation value is an absolute difference D2 between the signals C(n+2) and C(n),
the third correlation value is an absolute difference D3 between the signals C(n) and C(n-2), and
when the degree of similarity between the signals C(n+1) and C(n-1) is evaluated to be smaller than the predetermined level, the signal mixing unit mixes the signals C(n+1) and C(n-1) by the following formula.

$$\frac{D3 \times C(n+1) + D2 \times C(n-1)}{D2 + D3}$$

**4.** A method of processing a video signal comprising:

generating a first, a second and a third correlation values based on five sequential video line signals C(n-2) to C(n+2) that include two kinds of color-difference signals transmitted line sequentially, the first correlation value indicating a degree of similarity between the signals C(n+1) and C(n-1), the second correlation value indicating a degree of similarity between the signals C(n+2) and C(n), and the third correlation value indicating a degree of similarity between the signals C(n) and C(n-2);
determining a mixing ratio of the signals C(n+1) and C(n-1) according to a relative magnitude of the third correlation value with respect to the second correlation value when the degree of similarity between the signals C(n+1) and C(n-1) is evaluated to be smaller than a predetermined level based on the first correlation value;
mixing the signals C(n+1) and C(n-1) according to the mixing ratio; and
outputting a signal obtained by said mixing and the signal C(n) as two simultaneous color-difference signals.

**5.** The method according to claim 4, further comprising:

determining the mixing ratio to be a predetermined value regardless of the second and the third correlation values when the degree of similarity between the signals C(n+1) and C(n-1) is evaluated to be larger than the predetermined level.

**6.** The method according to claim 4, wherein
the second correlation value is an absolute difference D2 between the signals C(n+2) and C(n),
the third correlation value is an absolute difference D3 between the signals C(n) and C(n-2), and
when the degree of similarity between the signals C(n+1) and C(n-1) is evaluated to be smaller than the predetermined level, the signals C(n+1) and C(n-1) are mixed by the following formula.

$$\frac{D3 \times C(n+1) + D2 \times C(n-1)}{D2 + D3}$$

Fig. 1

Fig. 2

155

Fig. 3

Fig. 4

Fig. 5

255

1551

Cb (n+1) → ABSOLUTE DIFFERENCE → D1 → | COMPARISON | B1 →
Cb (n-1) → | | ← Th21

2554

2555

RATIO GENERATION UNIT → M

1553

Cr (n) → ABSOLUTE DIFFERENCE → D3 → | COMPARISON | 
Cr (n-2) → | | ← Th22 → B2

2556

Fig. 6

355

Fig. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 1236885 A
- JP 2006108779 A
- JP 6054338 A